(19) Europäisches Patentamt
European Patent Office
Office européen des brevets

(11) **EP 2 848 996 A1**

(12) **EUROPEAN PATENT APPLICATION**

(43) Date of publication:
**18.03.2015 Bulletin 2015/12**

(51) Int Cl.:
***G03B 35/10*** *(2006.01)*

(21) Application number: **14182457.3**

(22) Date of filing: **27.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.09.2013 JP 2013192049**

(71) Applicant: **FUJITSU LIMITED**
**Kawasaki-shi,**
**Kanagawa 211-8588 (JP)**

(72) Inventors:
• **Sato, Teruyuki**
**Kanagawa, 211-8588 (JP)**
• **Kakuko, Norihiro**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **Stereo imaging apparatus and stereo image generating method**

(57)    A stereo imaging apparatus (1) comprising: an imaging unit (2) which generates an image; a stereo adapter (8) which is mounted on the front of the imaging unit (2), and splits light from a subject into a first light flux and a second light flux along a parallax direction and guides the first and second light fluxes so that the first and second light fluxes are incident side by side on the imaging unit (2) in a direction perpendicular to the parallax direction; and a stereo image generating unit (6) which, based on the image, generates stereo images. The stereo image generating unit (6) includes: a dividing unit (11) which divides the image into two sub-images along the direction perpendicular to the parallax direction; a horizontal direction correcting unit (12) which corrects any rotation of the subject in the two sub-images; and a trapezoidal distortion correcting unit (13) which corrects any trapezoidal distortion of the subject in the two sub-images.

FIG. 7

**Description**

FIELD

The embodiments discussed herein are related to a stereo imaging apparatus and stereo image generating method for generating stereo images by using a stereo adapter capable of capturing images of a subject from two different directions.

BACKGROUND

Research for reproducing stereoscopic images has been proceeding for many years. In one known method of reproducing stereoscopic images, two images captured by imaging a subject from different directions are displayed side by side, presenting one image to the left eye of the viewer and the other image to the right eye. The pair of images used in such a method are referred to as stereo images.

For generating stereo images, it is known to use a stereo adapter which is mounted on the front of the imaging lens of a monocular camera so that two images of the same subject as viewed from different directions are focused on the left half and right half, respectively, of the camera's image plane (for example, refer to Japanese Laid-open Patent Publication No. H01-279235). The stereo adapter includes two mirror pairs disposed, for example, symmetrically about the center of the stereo adapter in the horizontal direction so that the images captured of the subject from two different viewpoints can be formed on the image sensor of the camera. In each mirror pair, the inside mirror is positioned in front of the imaging lens with its reflecting surface facing the imaging lens and tilted with respect to the optical axis of the imaging lens toward the horizontal direction. Then, the light flux from the subject, reflected by the outside mirror disposed outwardly of the inside mirror in the horizontal direction with respect to the imaging lens and having a reflecting surface oriented so as to face the subject, is reflected by the inside mirror and redirected to the imaging lens. In this way, the images of the subject as viewed from the positions of the respective outside mirrors are formed on the left half and right half, respectively, of the image plane of the imaging sensor. The left-eye and right-eye images constituting the stereo image pair can be obtained by trimming the regions containing the images of the subject from the left half and right half of the image obtained by shooting the subject using the stereo adapter.

However, when the stereo images are created using the stereo adapter disclosed in Japanese Laid-open Patent Publication No. H01-279235, the angle of view of each of the left-eye and right-eye images in the parallax direction in which parallax occurs becomes one half of the horizontal angle of view of the imaging lens. As a result, the extent of space contained in each image in the parallax direction is small. One possible approach to addressing this problem is to create the left-eye image and the right-eye image separately by using two cameras. However, when the subject is a moving object, if the shooting timing is not synchronized between the two cameras, the position of the subject contained in the left-eye image may not match the position or orientation of the subject contained in the right-eye image. If this happens, a stereoscopic image cannot be reproduced correctly from the left-eye and right-eye images. In particular, when using the stereo images for measuring the distance to a moving object, failure to correctly reproduce the stereoscopic image would significantly degrade the accuracy of measurement. As a result, when creating stereo images by using two cameras, there arises a need to provide a mechanism for synchronizing the shooting timing between the two cameras.

On the other hand, for use in an attachment for stereo image shooting, techniques have been proposed that increase the field of view in the parallax direction by guiding the light flux for the left eye and the light flux for the right eye to the imaging lens in such a manner that the light fluxes are arranged side by side in a direction perpendicular to the parallax direction (for example, refer to Japanese Laid-open Patent Publication Nos. H07-134345, 2000-81331, H08-171151, H08-234339, and 2004-4869).

SUMMARY

If the light flux for the left eye and the light flux for the right eye are arranged side by side in the direction perpendicular to the parallax direction, the position of the subject in the direction perpendicular to the parallax becomes displaced between the left-eye image and the right-eye image. As a result, with the techniques disclosed in the above-cited patent documents, the optical system of the attachment for compensating for the positional displacement is complex, and not only the size of the attachment but also the cost of the attachment increases.

For example, in the technique disclosed in Japanese Laid-open Patent Publication No. H07-134345, a prism is used in order to compensate for the vertical positional displacement between the light flux for the left eye and the light flux for the right eye.

On the other hand, in the technique disclosed in Japanese Laid-open Patent Publication No. 2000-81331, the light flux for the left eye and the light flux for the right eye are each rotated through 90° by using a doped prism, and are focused side by side onto an image sensor.

Further, in the techniques disclosed in Japanese Laid-open Patent Publication Nos. H08-171151, H08-234339, and 2004-4869, since the optics for the left eye and the optics for the right eye each contain a focusing lens, the attachment has in effect a binocular configuration. Therefore, if the attachment is to be mounted on the front of the imaging optics for use, there is a need to provide a converging lens for reconverting the light flux, once converged by the focusing lens, into parallel light flux. This increases the size of the attachment, making it difficult for the user to manipulate the attachment. Furthermore, since the optics are complex, the cost of the attachment also increases.

Accordingly, it is an object of the present invention to provide a stereo imaging apparatus that can simplify the optical system of the stereo adapter while ensuring approximately the same angle of view in the parallax direction as the angle of view of the imaging lens.

According to one embodiment, a stereo imaging apparatus is provided. The stereo imaging apparatus includes: an imaging unit which generates an image by shooting a subject; a stereo adapter which is mounted on the front of the imaging unit, and which splits light from the subject into a first light flux and a second light flux along a parallax direction and guides the first and second light fluxes so that the first and second light fluxes are incident side by side on the imaging unit in a direction perpendicular to the parallax direction and so that, in the first light flux, any ray parallel to an optical axis of the imaging unit when entering the stereo adapter is brought closer to the second light flux by forming a first angle with respect to the optical axis when leaving the stereo adapter and, in the second light flux, any ray parallel to the optical axis when entering the stereo adapter is brought closer to the first light flux by forming the first angle with respect to the optical axis when leaving the stereo adapter; and a stereo image generating unit which, based on the image, generates stereo images. The stereo image generating unit includes: a dividing unit which divides the image along the direction perpendicular to the parallax direction into a first region on which the first light flux is incident and a second region on which the second light flux is incident, and which outputs the first region as a first sub-image of the stereo images for one eye and the second region as a second sub-image of the stereo images for the other eye; a horizontal direction correcting unit which corrects any rotation of the subject occurring in the first and second sub-images in proportion to the first angle; and a trapezoidal distortion correcting unit which corrects any trapezoidal distortion of the subject occurring in the first and second sub-images in proportion to the first angle.

BRIEF DESCRIPTION OF DRAWINGS

Figure 1 is a diagram schematically illustrating the configuration of a stereo imaging apparatus incorporating a stereo image generating apparatus.

Figure 2A is a plan view of an optical system of a stereo adapter.

Figure 2B is a side view of the optical system of the stereo adapter as viewed from the direction of arrow A in Figure 2A.

Figure 2C is a side view of the optical system of the stereo adapter as viewed from the direction of arrow B in Figure 2A.

Figure 3 is a diagram illustrating one example of the positional relationship between the mirrors constituting one mirror pair in the stereo adapter.

Figure 4 is a diagram illustrating the relationship between the incidence angle of an incident ray on a reflecting surface and the reflection angle of the reflected ray.

Figure 5 is a diagram illustrating one example of the relationship between the incidence angle and reflection angle of the ray for each of the mirrors constituting one mirror pair in the stereo adapter.

Figure 6A represents one example of an image generated by an imaging unit when neither outside mirror is tilted forward or backward.

Figure 6B represents one example of an image generated by the imaging unit when the outside mirrors are tilted forward and backward, respectively.

Figure 7 is a diagram illustrating the configuration of the stereo image generating apparatus according to one embodiment.

Figure 8 is a diagram for explaining the rotation of a subject's image due to the outside mirror in the stereo adapter.

Figure 9 is a diagram illustrating the arrangement of an object plane and image plane that does not cause any trapezoidal distortion.

Figure 10 is a diagram illustrating a planar projective transformation model.

Figure 11 is a diagram illustrating a modified example of the planar projective transformation model.

Figure 12 is an operation flowchart of a stereo image generating process.

Figure 13 is a diagram illustrating the configuration of a computer that operates as the stereo image generating apparatus by executing a computer program for implementing the functions of the various units constituting the stereo image generating apparatus according to each embodiment or its modified example.

DESCRIPTION OF EMBODIMENTS

A stereo image generating apparatus according to one embodiment and a stereo imaging apparatus incorporating the stereo image generating apparatus will be described below with reference to the drawings. The stereo imaging apparatus generates stereo images from the image obtained by shooting a subject using a stereo adapter having two mirror pairs which guide a light flux for the left eye and a light flux for the right eye toward the imaging optics of a monocular camera so that the respective light fluxes are incident side by side on the imaging optics in a direction perpendicular to the parallax direction. The stereo adapter guides the light flux for the left eye so that any ray parallel to the optical axis of the imaging optics when entering the stereo adapter is brought closer to the light flux for the right eye by forming a prescribed angle with respect to the optical axis when leaving the stereo adapter. Likewise, the stereo adapter guides the light flux for the right eye so that any ray parallel to the optical axis of the imaging optics when entering the stereo adapter is brought closer to the light flux for the left eye by forming the prescribed angle with respect to the optical axis when leaving the stereo adapter. The stereo imaging apparatus divides the image into a left-eye image (first sub-image) and a right-eye image (second sub-image) along the direction perpendicular to the parallax direction. Then, the stereo image generating apparatus corrects any rotation and trapezoidal distortion of the subject occurring in the left-eye and right-eye images due to the prescribed angle.

In the present embodiment, the stereo image generating apparatus is incorporated into a digital camera, a camera-equipped mobile phone, or a camera-equipped portable information terminal to which the stereo adapter can be attached.

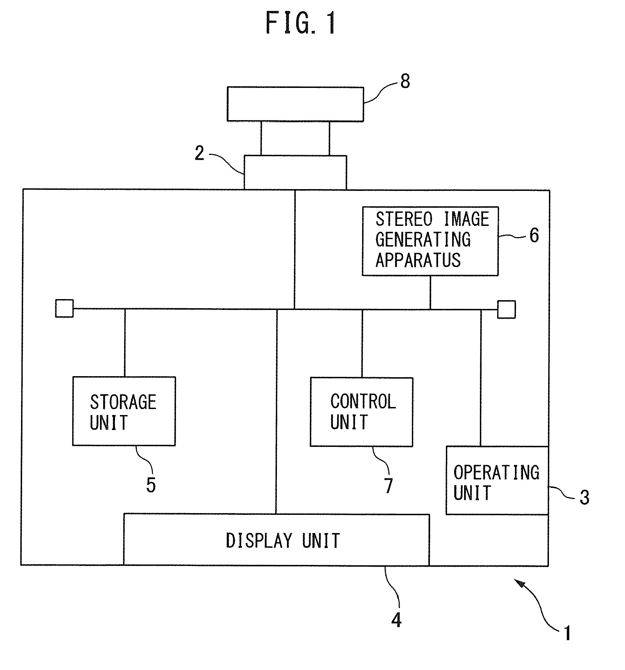

Figure 1 is a diagram schematically illustrating the configuration of a digital camera incorporating the stereo image generating apparatus.

As depicted in Figure 1, the digital camera 1 is one example of the stereo imaging apparatus, and includes, in addition to the stereo image generating apparatus 6, an imaging unit 2, an operating unit 3, a display unit 4, a storage unit 5, a control unit 7, and a stereo adapter 8. The digital camera 1 may further include an interface circuit (not depicted) conforming to a serial bus standard such as Universal Serial Bus in order to connect the digital camera 1 to another apparatus such as a computer or a television receiver. The control unit 7 is connected to the other component elements of the digital camera 1, for example, via a bus.

The imaging unit 2 includes an image sensor having an array of solid-state imaging devices arranged in two dimensions, and imaging optics for focusing images captured of a subject through the stereo adapter 8 onto the upper half and lower half, respectively, of the image sensor. The imaging unit 2 forms the image of the subject on the upper half and lower half image regions, respectively. Each time the image is generated, the imaging unit 2 sends the generated image to the stereo image generating apparatus 6.

The operating unit 3 includes, for example, various kinds of operating buttons or dial switches for the user to operate the digital camera 1. Then, in response to the user operation, the operating unit 3 sends a control signal for starting the shooting, focusing, or other action, or a setup signal for setting up the shutter speed, aperture opening, etc., to the control unit 7.

The display unit 4 includes, for example, a display device such as a liquid crystal display device, and displays various kinds of information received from the control unit 7 or images generated by the imaging unit 2. The operating unit 3 and the display unit 4 may be combined into one unit using, for example, a touch panel display.

The storage unit 5 includes, for example, a readable/writable volatile or nonvolatile semiconductor memory circuit. The storage unit 5 stores the stereo images generated by the stereo image generating apparatus 6. The storage unit 5 may further store the images received from the imaging unit 2. If the functions of the stereo image generating apparatus 6 are to be implemented by executing a computer program on a processor incorporated in the control unit 7, the computer program may be stored in the storage unit 5.

The stereo image generating apparatus 6 generates the left-eye image by trimming, from the image captured by shooting the subject using the stereo adapter 8, the region containing the subject's image corresponding to the upper half of the captured image, and the right-eye image by trimming, from the captured image, the region containing the subject's image corresponding to the lower half of the captured image. For simplicity, the left-eye image will hereinafter be referred to as the left image, and the right-eye image as the right image. The stereo image generating apparatus 6 corrects any rotation and trapezoidal distortion of the subject occurring in the left and right images due to the arrangement of the mirror pairs in the stereo adapter 8. The details of the stereo image generating apparatus 6 will be described later.

The control unit 7 includes at least one processor and its peripheral circuitry. The control unit 7 controls the entire operation of the digital camera 1.

The stereo adapter 8 is detachably mounted onto the front of the imaging lens system of the imaging unit 2. For this purpose, the stereo adapter 8 includes a mounting mechanism (not depicted) for mounting the stereo adapter 8 onto the front of the imaging unit 2. The stereo adapter 8 further includes two mirror pairs for forming the images of the subject as viewed from two different directions onto the image plane of the imaging unit 2. The stereo adapter 8 and the imaging unit 2 may be integrated into one lens barrel.

In the present embodiment, the stereo adapter 8 is mounted on the imaging unit 2 so that the parallax direction coincides with the horizontal direction and the direction perpendicular to the parallax direction coincides with the vertical direction. Accordingly, the angle of view of each of the left and right images in the parallax direction is approximately the same as the horizontal angle of view of the imaging unit 2.

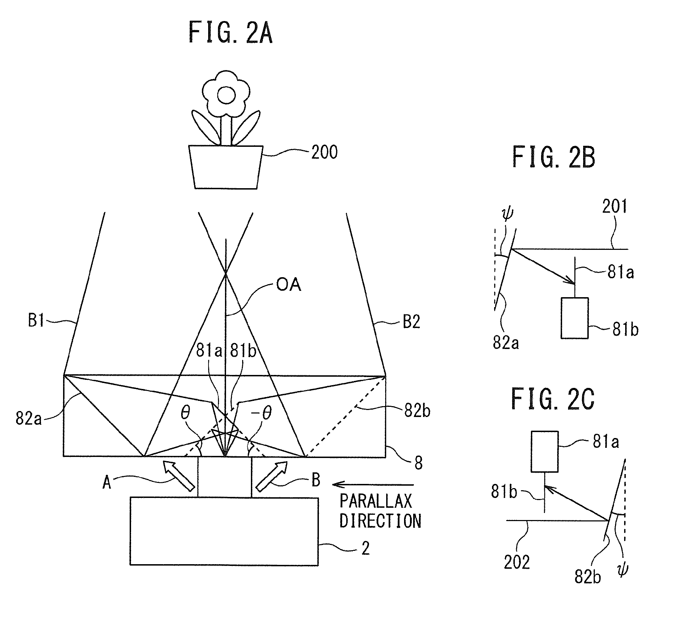

Figure 2A is a plan view of the optical system of the stereo adapter 8. Figure 2B is a side view of the optical system of the stereo adapter as viewed from the direction of arrow A in Figure 2A. Figure 2C is a side view of the optical system of the stereo adapter as viewed from the direction of arrow B in Figure 2A. As depicted in Figures 2A to 2C, the stereo adapter 8 contains the pair of mirrors 81a and 82a for the left eye and the pair of mirrors 81b and 82b for the right eye. In the present embodiment, each mirror is a plane mirror with no optical power. The pair of mirrors 81a and 82a for the left eye and the pair of mirrors 81b and 82b for the right eye are disposed so as to be symmetrical to each other about the optical axis OA of the imaging unit 2 in the horizontal direction of the stereo adapter 8 when mounted on the digital camera 1. The mirrors 81a and 81b are positioned in front of the imaging optics of the imaging unit 2, and are arranged side by side in the vertical direction of the stereo adapter 8, i.e., the direction perpendicular to the parallax direction. The horizontal plane containing the optical axis OA of the imaging unit 2 defines the boundary between the mirror 81a and the mirror 81b.

The mirrors 82a and 82b receive light fluxes B1 and B2 from the subject 200 and reflect them toward the respective mirrors 81a and 81b. Then, the light fluxes B1 and B2 are reflected by the respective mirrors 81a and 81b into the imaging optics of the imaging unit 2. The orientation of each mirror is adjusted so that the images of the subject 200 will be focused on the upper half and lower half regions, respectively, of the image sensor in the imaging unit 2.

More specifically, the mirror 81a is oriented so that its reflecting surface faces the imaging unit 2 and is rotated about the vertical axis by an angle $-\theta$, for example, -45°, with respect to the entrance pupil plane of the imaging unit 2. On the other hand, the mirror 81b is oriented so that its reflecting surface faces the imaging unit 2 and is rotated about the vertical axis by an angle $\theta$, for example, 45°, with respect to the entrance pupil plane of the imaging unit 2 in the direction opposite to that of the mirror 81a. The sign of the angle $\theta$ is positive when the mirror is rotated in the counterclockwise direction with respect to the entrance pupil plane.

The mirrors 82a and 82b are disposed outwardly of the respective mirrors 81a and 81b. Their reflecting surfaces are oriented so as to face the subject. The mirror 82a is disposed so that its reflecting surface is rotated about the vertical axis by $\theta°$ with respect to the object plane whose image is to be focused on the image plane of the imaging unit 2. More specifically, the mirror 82a is rotated about the vertical axis by an angle $(\pi-\theta)$, for example, 135°, with respect to the entrance pupil plane of the imaging unit 2. On the other hand, the mirror 82b is disposed so that its reflecting surface is rotated about the vertical axis by $-\theta°$ with respect to the object plane in the direction opposite to that of the mirror 82a. More specifically, the mirror 82b is rotated about the vertical axis by an angle $(\theta-\pi)$, for example,-135°, with respect to the entrance pupil plane of the imaging unit 2.

If the mirrors are arranged with their reflecting surfaces parallel to the vertical direction, the light flux B1 passes above the horizontal plane containing the optical axis of the imaging unit 2, and the light flux B2 passes below the horizontal plane. As a result, the image contained in the upper half of the image generated by the imaging unit 2 and the image contained in the lower half do not overlap each other, so that the stereo image generating apparatus 6 is unable to create stereo images from the generated image.

Therefore, in the present embodiment, the reflecting surface of the mirror 82a is tilted forward by an angle $\phi$ about an axis perpendicular to the vertical axis and parallel to the reflecting surface so that the light fluxes B1 and B2 at least partially overlap each other in a region nearer to the object than to the stereo adapter 8. Similarly, the reflecting surface of the mirror 82b is tilted backward by the angle $\phi$ about an axis perpendicular to the vertical axis and parallel to the reflecting surface. As a result, an incident ray 201 parallel to the optical axis OA is reflected by the mirror 82a downward relative to the horizontal plane containing the optical axis OA by an angle proportional to the forward tilt angle. Conversely, an incident ray 202 parallel to the optical axis OA is reflected by the mirror 82b upward relative to the horizontal plane containing the optical axis OA by an angle proportional to the backward tilt angle.

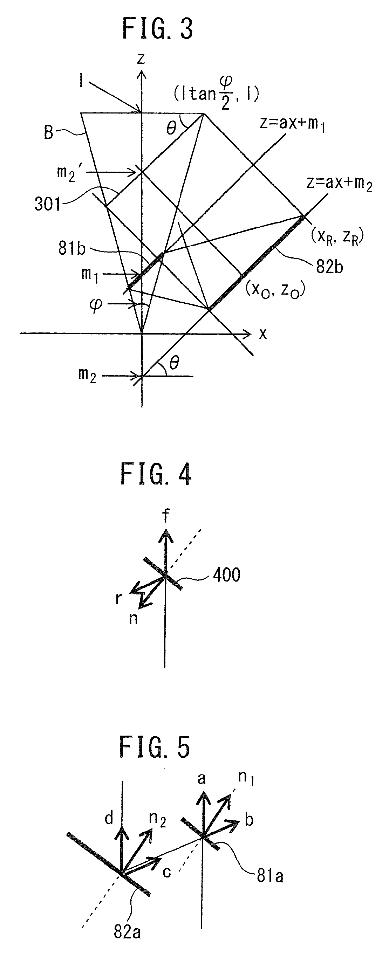

Next, the positional relationship between the respective mirrors will be described in detail with reference to Figure 3 illustrating the arrangement of the pair of mirrors 81b and 82b for the right eye. In Figure 3, the direction parallel to the entrance pupil plane of the imaging optics of the imaging unit 2 is taken to be the x axis, and the direction parallel to the optical axis of the imaging unit 2 is taken to be the z axis. Further, the vertical direction is taken to be the y axis. The horizontal plane at y =0 corresponds to the boundary plane between the pair of mirrors 81a and 82a for the left eye and the pair of mirrors 81b and 82b for the right eye. Let $\phi$ denote the horizontal angle of view of the imaging unit 2, and $\theta$ ($\alpha = \tan\theta$) denote the tilt angle of the mirror 81b with respect to the x axis. Further, let $m_1$ represent the distance from the entrance pupil plane to the mirror 81b along the optical axis of the imaging unit 2, and 1 represent the length along the optical axis from the entrance pupil to the aperture plane on the object side of the stereo adapter 8.

In this case, the position to which the cut surface 301 with angle $\theta$, passing through an end point on the object-side aperture plane of the principal ray flux B represented by a triangle of length 1 spreading with the horizontal angle of view, $\phi$, from the vertex of the entrance pupil plane, is moved in line symmetrical fashion with respect to the reflecting surface of the inside mirror 81b is the position of the outside mirror 82b. The reflecting surface of the mirror 81b is represented by a straight line $z = ax + m_1$. From the above, the base line length $B_1$, i.e., the distance between the left-eye viewpoint and the right-eye viewpoint, and the distance between the left and right edges of each mirror in the stereo adapter 8 are formulated. More specifically, the coordinates $(x_R, z_R)$ of the right edge of the mirror 82b and the coordinates $(x_0, z_0)$ of the point at which the principal ray parallel to the optical axis of the imaging unit 2 intersects the reflecting surface of the mirror 82b are computed from the coordinates $(l\tan\phi/2, 1)$ and $(0, m_2')$ of the points A and B disposed in line symmetrical fashion with respect to the straight line $z = ax + m_1$.

More specifically, the coordinates $(x_R, z_R)$ of the right edge of the mirror 82b are given as follows:

$$x_R = a\left(l - \frac{a^2 l + 2al\tan\frac{\varphi}{2} + 2m_1 - l}{a^2 + 1}\right) + l\tan\frac{\varphi}{2}$$

$$z_R = \frac{a^2 l + 2al\tan\frac{\varphi}{2} + 2m_1 - l}{a^2 + 1}$$

$$(1)$$

If $\theta = 45°$ ($a = 1$), then $(x_R, z_R)$ are given as:

$$x_R = l - m_1 : \text{ Not dependent on } \varphi$$

$$z_R = l\tan\frac{\varphi}{2} + m_1$$

$$(2)$$

On the other hand, the coordinates $(x_0, z_0)$ are found by:

$$x_0 = \frac{2a(m_2' - m_1)}{a^2 + 1}$$

$$z_0 = \frac{(a^2 - 1)m_2' + 2m_1}{a^2 + 1}$$

$$(3)$$

$$m_2' = l - al\tan\frac{\varphi}{2}$$

If $\theta = 45°$ ($a = 1$), then $x_0$ is given as:

$$x_0 = m_2' - m_1 = x_R - l\tan\frac{\varphi}{2}$$

$$(4)$$

Since $x_0$ multiplied by 2 equals the base line length $B_1$, if $m_1$ is fixed, then one half of the base line length $B_1$ is equal to $x_R$ minus one half of the aperture of the stereo adapter 8. In other words, if $x_R$ is determined, the base line length $B_1$ can be made longer as the horizontal angle of view becomes smaller.

Next, a description will be given of how the constraint condition for the distance m1 from the entrance pupil plane to the inside mirror 81b is formulated. In order for the light flux B not to be vignetted by the mirror 81b, the left edge ray incident from the object side onto the outside mirror 82b needs to lie outwardly of the rightmost edge $(x_1, z_1)$ of the mirror 81b. The coordinates $(x_L, z_L)$ through which the left edge ray passes at a position located at the distance $z_R$ from the entrance pupil plane i.e., the distance from the entrance pupil plane to the rightmost edge of the mirror 82b) are given as follows:

$$(x_L, z_L) = (x_R - 2l\tan\frac{\varphi}{2},\ z_R) \tag{5}$$

On the other hand, the rightmost edge $(x_1, z_1)$ of the mirror 81b is the position where the straight line $z = ax + m_1$ representing the reflecting surface of the mirror 81b intersects the straight line $z = x/\tan(\phi/2)$ representing the right edge ray in the light flux B. Hence, the following equation holds.

$$x_L = \frac{m_1\tan\frac{\varphi}{2}}{1 - a\tan\frac{\varphi}{2}} \leq x_R - 2l\tan\frac{\varphi}{2} \tag{6}$$

If $\theta = 45°$ (a = 1)in the equation (6), then the following equation holds because $x_R = 1 - m_1$.

$$m_1 \leq l(1 - 2\tan\frac{\varphi}{2})(1 - \tan\frac{\varphi}{2}) \tag{7}$$

That is, the distance $m_1$ needs to be set so as to satisfy the equation (7).

Next, the constrains for the forward tilt angle of the outside mirror 82a and the backward tilt angle of the mirror 82b will be described. The forward tilt angle and the backward tilt angle are determined by the tilt angle $\theta$ of the mirror about the vertical axis and the vertical angle of view, $\phi_v$, of the imaging optics of the imaging unit 2.

In order for the image contained in the upper half of the image generated by the imaging unit 2 and the image contained in the lower half to overlap each other irrespective of the distance from the imaging unit 2, it is preferable that the ray corresponding to the center of the field of view of the upper half and the ray corresponding to the center of the field of view of the lower half are made parallel to each other at the subject side. In other words, it is preferable that the forward tilt angle of the mirror 82a is set so that when the ray incident in parallel to the optical axis of the imaging unit 2 onto the center of the mirror 82a that directs the light flux to the upper half of the entrance pupil plane of the imaging unit 2 leaves the stereo adapter 8, the ray makes an angle of $\phi_v/4$ in the vertical direction with respect to the optical axis. Likewise, it is preferable that the backward tilt angle of the mirror 82b is set so that when the ray incident in parallel to the optical axis of the imaging unit 2 onto the center of the mirror 82b that directs the light flux to the lower half of the entrance pupil plane of the imaging unit 2 leaves the stereo adapter 8, the ray makes an angle of $\phi_v/4$ in the vertical direction with respect to the optical axis.

Figure 4 is a diagram illustrating the relationship between the incidence angle of the incident ray on the reflecting surface and the reflection angle of the reflected ray. In Figure 4, let f denote the unit direction vector of the incident ray on the reflecting surface 400, n denote the normal vector to the reflecting surface 400, and r denote the unit direction vector of the reflected ray. Since the incidence angle is equal to the reflection angle, the following relation holds between the respective vectors.

$$\vec{r} = \vec{f} - 2(\vec{f}\cdot\vec{n})\vec{n} \tag{8}$$

For the pair of left-eye mirrors 81a and 82a, the unit direction vector of the ray incident from the imaging unit 2 side onto the inside mirror 81a is denoted by a = (0, $\sin\phi_v/4$, $\cos\phi_v/4$), as depicted in Figure 5. Further, the reverse vector of the normal vector to the reflecting surface of the mirror 81a is denoted by n1 = ($\sin\theta$, 0, $\cos\theta$), and the unit direction vector of the ray reflected by the mirror 81a is denoted by b = (x, y, z). In this case, the following equation holds from the relation (8).

$$\vec{b} = 2(\vec{a}\cdot\vec{n_1})\vec{n_1} - \vec{a} \tag{9}$$

Hence, the elements of the unit direction vector of the reflected ray are given as follows:

$$x = \alpha \sin 2\theta \, , \, y = -\beta, \, z = \alpha \cos 2\theta \qquad (10)$$

$$\alpha = \cos\varphi_V/4 \, , \beta = \sin\varphi_V/4$$

Next, the reverse vector of the unit direction vector of the ray incident on the outside mirror 82a is denoted by c, where c = b. Further, the normal vector to the reflecting surface of the mirror 82a when the mirror 82a is rotated by the forward tilt angle $\phi$ about the horizontal axis parallel to its reflecting surface is denoted by n2 = (sin$\theta$, -sin$\phi$, cos$\theta$cos$\phi$). Then, the unit direction vector of the ray reflected by the mirror 82a is denoted by d = (sin$\lambda$, 0, cos$\lambda$). In this case, the following equation holds from the relation (8).

$$\vec{d} = 2(\vec{c} \cdot \vec{n_2})\vec{n_2} - \vec{c} \qquad (11)$$

Hence, the following relation holds

$$x \cos\theta - z \sin\theta = -\cos\theta \sin\lambda + \sin\theta \cos\lambda \qquad (12)$$

$$y = -2x \sin\theta \sin\psi \cos\psi + 2y \sin^2\psi - 2z \cos\theta \sin\psi \cos\psi$$

Eliminating x, y, and z from the equation (12), the equation can be solved for $\lambda$ and the forward tilt angle $\phi$ from the rotation angle $\theta$ of the mirrors 81a and 82a about the vertical axis. In particular, when $\theta$ = 45°, the forward tilt angle $\phi$ can be expressed by the following equation by using the vertical angle of view, $\phi_V$, of the camera.

$$\cos^2 2\psi = \frac{1}{2 \tan^2\frac{\varphi_V}{4} + 1} \qquad (13)$$

For example, when the horizontal angle of view of the imaging unit 2 is 30°, and the aspect ratio of the image generated by the imaging unit 2 is 4:3, the vertical angle of view of the imaging unit 2 is 22.76°. In this case, from the equation (13) the forward tilt angle of the left-eye outside mirror 82a that directs the light flux from the subject to the upper half of the imaging unit 2 is about 4°. It is assumed that the forward tilt angle has a positive value when the reflecting surface faces downwardly of the horizontal plane. On the other hand, the backward tilt angle of the right-eye outside mirror 82b that directs the light flux from the subject to the lower half of the imaging unit 2 is about -4°.

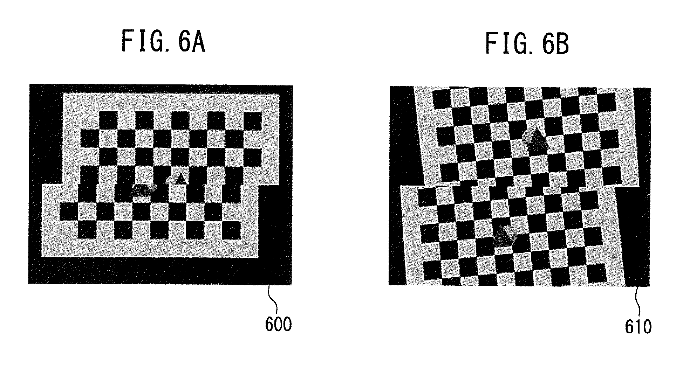

Figure 6A represents one example of the image generated by the imaging unit 2 when the forward tilt angle of the outside mirror 82a and the backward tilt angle of the outside mirror 82b are both 0°. In this case, since the image of the subject contained in the upper half of the generated image 600 and the image of the subject contained in the lower half do not overlap each other, the stereo image generating apparatus 6 is unable to create stereo images from the image 600. On the other hand, Figure 6B represents one example of the image generated by the imaging unit 2 when the forward tilt angle of the mirror 82a and the backward tilt angle of the mirror 82b are both set in accordance with the equation (13). In this case, the image of the subject contained in the upper half of the generated image 610 and the image of the subject contained in the lower half partially overlap each other. The stereo image generating apparatus can then create stereo images by trimming the overlapping portions as the left and right images, respectively, from the upper half and lower half of the image 610.

However, since the outside mirrors are each tilted forward or backward, the image of the subject comes out rotated in the generated image. Furthermore, the image contained in the upper half of the generated image and the image contained in the lower half are each distorted in trapezoidal form. This is because, since the outside mirrors are each tilted forward or backward, the center of the light flux passing above the optical axis of the imaging unit 2 and the center of the light flux passing below the optical axis of the imaging unit 2 are made parallel to each other when the two fluxes would normally be separated farther away from each other with increasing distance from the imaging unit 2.

Therefore, the stereo image generating apparatus 6 trims the upper half and lower half images as the left and right images, respectively, from the image generated by the imaging unit 2, and corrects the left and right images for the rotation and trapezoidal distortion of the subject. In this way, the stereo image generating apparatus 6 creates the stereo images formed from the pair of left and right images.

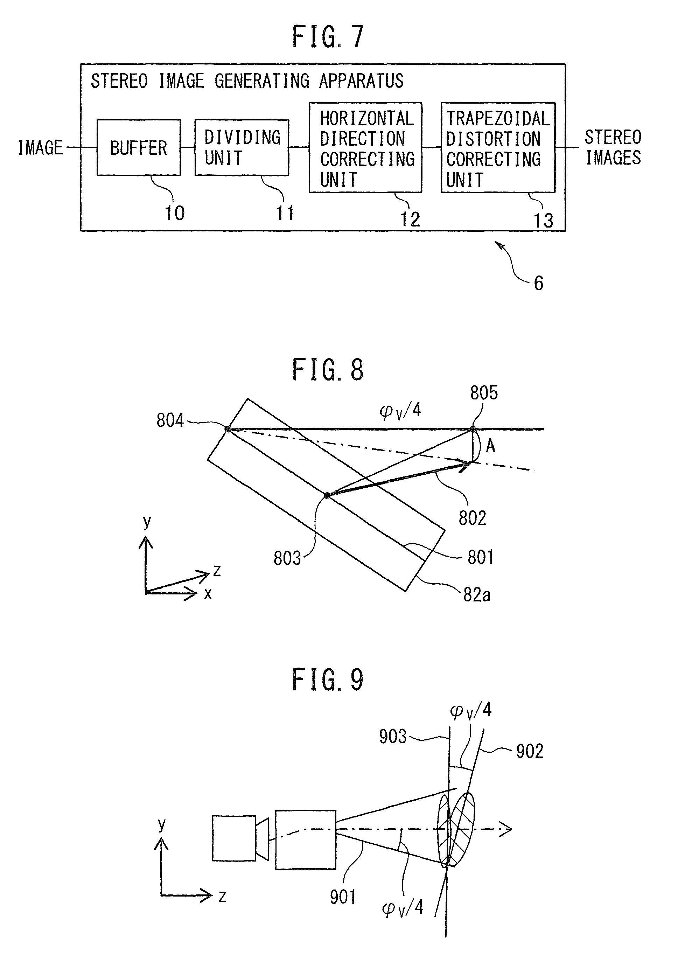

The details of the stereo image generating apparatus 6 will be described below. Figure 7 is a diagram illustrating the configuration of the stereo image generating apparatus 6. As depicted in Figure 7, the stereo image generating apparatus 6 includes a buffer 10, a dividing unit 11, a horizontal direction correcting unit 12, and a trapezoidal distortion correcting unit 13. These units constituting the stereo image generating apparatus 6 may be implemented as separate circuits on the stereo image generating apparatus 6, or may be implemented in the form of a single integrated circuit that implements the functions of the respective units.

Alternatively, the stereo image generating apparatus 6 may be incorporated into the control unit 7. In this case, the units constituting the stereo image generating apparatus 6 are implemented, for example, as functional modules by executing a computer program on a processor incorporated in the control unit 7. Then, various kinds of data generated by the stereo image generating apparatus or to be used by the stereo image generating apparatus are stored in the storage unit 5.

The buffer 10 includes, for example, a volatile semiconductor memory circuit, and temporarily stores images generated by the imaging unit 2 and input to the stereo image generating apparatus 6. Further, the buffer 10 may temporarily store the left and right images generated by the dividing unit 11.

The dividing unit 11 divides the image obtained by shooting the subject using the stereo adapter 8 into the upper half and lower half images. The upper half image corresponds to the subject's image formed by the light flux guided by the left-eye mirror pair contained in the stereo adapter 8. On the other hand, the lower half image corresponds to the subject's image formed by the light flux guided by the right-eye mirror pair contained in the stereo adapter 8. The dividing unit 11 outputs the upper half image as the left image and the lower half image as the right image.

If the light flux is vignetted by the housing of the stereo adapter 8 or any one of the mirrors, the dividing unit 11 may create the left image by trimming the region corresponding to the incidence range of the light flux from the upper half image. Likewise, the dividing unit 11 may create the right image by trimming the region corresponding to the incidence range of the light flux from the lower half image.

The dividing unit 11 passes the left and right images to the horizontal direction correcting unit 12.

The horizontal direction correcting unit 12 corrects each of the left and right images in such a manner as to cancel out the rotation of the subject proportional to the angle by which the rays entering the stereo adapter in parallel to the optical axis of the imaging unit 2 has been rotated on reflection by the corresponding mirror pair. First, the rotation angle of the subject will be described.

Figure 8 is a diagram for explaining the rotation of the subject's image due to the outside mirror 82a in the stereo adapter 8. Since the mirror 82a is tilted forward, the ray flux 801 parallel to the horizontal plane is reflected obliquely downward by the mirror 82a. The optical path length that the light reflected at the outside endpoint (i.e., the left edge) of the mirror 82a traverses until it reaches the imaging unit 2 is longer than the optical path length that the light reflected at the inside endpoint (i.e., the right edge) of the mirror 82a traverses until it reaches the imaging unit 2. Accordingly, of the rays 801, rays reflected at positions nearer to the outside edge of the mirror 82a are incident at positions displaced toward the lower left on the entrance pupil plane of the imaging unit 2 after reflection by the mirror 81a. As a result, in the image generated by the imaging unit 2, the horizontal line in the object plane is tilted so as to slope down to the left. Based on this fact, the rotation angle of the horizontal line can be calculated in the image generated by the imaging unit 2.

More specifically, the angle $\alpha$ for correcting the rotation of the subject in the image can be obtained by noting the point at which the ray parallel to the optical axis of the imaging unit 2 and coinciding with the optical axis in the horizontal position intersects the entrance aperture plane of the stereo adapter 8 after reflection by the pair of mirrors 81a and 82a. For simplicity, it is assumed that the position of the outside edge of the mirror 82 on the z axis, i.e., the position along the optical axis of the imaging unit 2, is the same as the position of the entrance aperture plane on the z axis.

The vector 802 depicted in Figure 8 represents the ray parallel to the optical axis of the imaging unit 2 and reflected at the reflecting point 803 (coordinates $(-x_0, 0, z_0)$) on the mirror 82a. In the present embodiment, the mirror 82a is tilted forward so that the ray parallel to the optical axis of the imaging unit 2 and incident on the mirror 82a from the subject side makes an angle of $\phi_V/4$ with respect to the optical axis when reflected by the mirrors 82a and 81a. As a result, the vector 802 is directed to a position below the horizontal plane by making an angle of $\phi_V/4$ downward with respect to the horizontal plane. The amount by which the ray represented by the vector 802 is shifted downward from the reflecting point on the mirror 82a to the point at which the ray intersects the entrance aperture plane of the stereo adapter 8 is denoted by A. Then, noting the right-angled triangle formed by the vector 802, the amount of shift A, and the horizontal plane, the following equation holds.

$$\tan \varphi_V/4 = \frac{A}{z_R - z_0} \qquad (14)$$

On the other hand, note the right-angled triangle formed by the endpoint 804 (coordinates $(-x_R, 0, z_R)$) in the entrance aperture plane of the stereo adapter 8, the point of intersection 805 (coordinates ($-x_0$, 0, $z_R$) at which the vector 802 intersects the entrance aperture plane when the forward tilt angle of the mirror 82a is 0°, and the point located lower than the point of intersection 805 by a distance equal to the amount of shift A. Then, the following equation holds.

$$\tan \alpha = \frac{A}{x_R - x_c} \qquad (15)$$

Eliminating the amount of shift A from the equations (14) and (15), and substituting the coordinates of $x_R$, $z_R$, $x_0$, and $z_0$ given by the equations (1) and (3), the following equation holds.

$$\tan \alpha = \tan \theta * \tan \frac{\varphi_V}{4} \qquad (16)$$

From the equation (16), it can be seen that the rotation angle $\alpha$ of the subject in the left image is expressed by the rotation angle $\theta$ of the pair of mirrors 81a and 82a about the vertical axis and the vertical angle of view, $\phi_v$, of the imaging unit 2. The rotation angle of the subject in the right image can also be calculated from the equation (16), since the mirrors 81b and 82b are disposed in line symmetrical fashion to the mirrors 81a and 82a with respect to the vertical plane passing through the optical axis of the imaging unit 2.

The rotation angle $\alpha$ of the subject is expressed by the rotation angle $\theta$ and the vertical angle of view, $\phi_v$, of the imaging unit 2, as described above, because the mirror 82 is tilted about the vertical axis with respect to the entrance pupil plane and the object plane and is not oriented perpendicular to the optical axis. As a result, the optical path length that the ray reflected at the outside edge of the mirror 82a traverses until it reaches the imaging unit 2 differs from the optical path length that the ray reflected at the inside edge of the mirror 82a traverses until it reaches the imaging unit 2. This optical path length difference depends on the rotation angle $\theta$. As a result, the vertical angle of view as a parameter in the vertical direction has an effect on the rotation of the subject in the image in proportion to the rotation angle $\theta$.

The matrix for correcting the rotation of the subject in the left and right images is given by a 2x2 affine transformation that provides a rotation angle ($-\alpha$) whose direction is opposite to that of the rotation angle $\alpha$ of the subject in the image generated by the imaging unit 2, and is expressed by the following equation.

$$\begin{pmatrix} u' \\ v' \end{pmatrix} = \begin{pmatrix} \cos\alpha & \sin\alpha \\ -\sin\alpha & \cos\alpha \end{pmatrix} \begin{pmatrix} u \\ v \end{pmatrix} \qquad (17)$$

where u and v represent the horizontal and vertical coordinates of an arbitrary pixel in the image whose origin is taken at the center of the image generated by the imaging unit 2, i.e., at the pixel in the image that corresponds to the optical axis of the imagining unit 2. On the other hand, u' and v' represent the horizontal and vertical coordinates of the pixel in the corrected image that corresponds to the pixel represented by the coordinates (u, v).

By transforming the coordinates of each pixel in the left and right images in accordance with the equation (17), the horizontal direction correcting unit 12 can correct the rotation of the subject occurring in the image due to the forward tilting of the mirror 82a and the backward tilting of the mirror 82b.

The horizontal direction correcting unit 12 passes the left and right images corrected for the rotation of the subject to the trapezoidal distortion correcting unit 13.

Since the outside mirrors in the stereo adapter 8 are each tilted forward or backward, the object plane corresponding to the image plane of the imaging unit 2 is tilted when the light is guided through the stereo adapter 8. As a result, the object in the object plane parallel to the image plane is projected obliquely on the image plane through the stereo adapter 8 and the imaging unit 2. As a result, in the image generated by the imaging unit 2, the image of the subject is distorted in trapezoidal form.

The trapezoidal distortion correcting unit 13 corrects the trapezoidal distortion caused by the oblique projection.

First, the trapezoidal distortion occurring in the image will be studied. Note that, as depicted in Figure 9, the planar plane 902 perpendicular to the ray 901 that is made parallel to the optical axis of the imaging unit 2 by passing through the stereo adapter 8 is focused on the image plane of the imaging unit 2 without being distorted in trapezoidal form. The trapezoidal distortion correcting unit 13 can correct the trapezoidal distortion by applying a planar projective transformation to this planar plane with respect to the vertical plane 903. In the present embodiment, the tilt angles of the mirrors 82a and 82b are set so that the rays parallel to the optical axis of the imaging unit 2 are tilted by $\phi_v/4$ with

respect to the optical axis by passing through the stereo adapter 8. As a result, the tilt angle of the planar plane relative to the vertical plane 903 is calculated as $\phi_V/4$ from the supplementary angle relationship of a right-angled triangle.

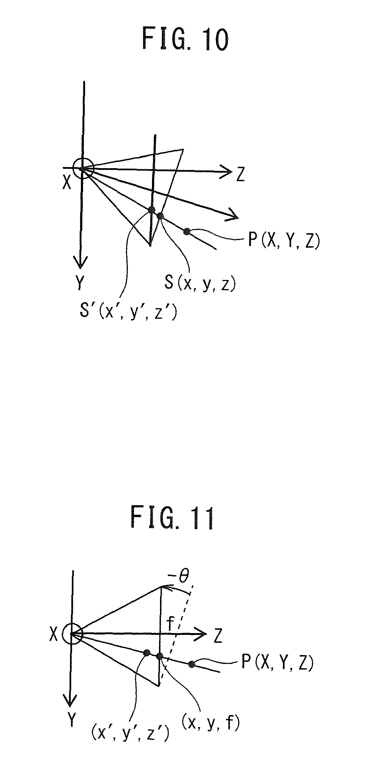

The matrix for correcting the trapezoidal distortion of an image defined in the camera coordinate system (u, v) is given by a 3x3 planar projective transformation. As illustrated in Figure 10, in order to obtain the planar projective transformation, the coordinates (x, y, z) of a point s on the image plane of a camera whose optical axis coincides with the Z axis, which correspond to the coordinates (X, Y, Z) of a point P in the world coordinate system, and the coordinates (x', y', z') of a point s' on the image plane of a camera whose optical axis is rotated by θ° about the X axis are obtained.

Then, the desired planar projection matrix is obtained by converting the coordinates (x, y, z) and (x', y', z') into the points (u, v) and (u', v') in the camera coordinate system defined by the camera and by obtaining the mapping from the coordinates (u, v) to the coordinates (u', v'). To facilitate understanding of the transformation to the camera coordinate system, it is assumed that the world coordinate system is a right-handed system.

The planar projective transformation model illustrated in Figure 10 can also be defined in a coordinate system obtained by rotating the coordinate system of Figure 10 by -θ about the X axis, as illustrated in Figure 11, without loss of generality (θ is positive when the rotation is in the right-handed direction).

The coordinates (x', y', z') represents the point of intersection of the equations (y-h) = tan(90-θ) (z-f) = (1/tanθ) (z-f) and y = (Y/Z)z. From these equations, z' is calculated as follows:

$$z' = \frac{f - h\tan\theta}{Z - Y\tan\theta} Z \qquad (18)$$

where f is the focal length of the camera.

Further, from the relations x' = (z'/Z)X and y' = (z'/Z)Y, the perspective transformation equation for the camera is obtained as follows:

$$s'\begin{pmatrix} x' \\ y' \\ 1 \end{pmatrix} = \begin{pmatrix} f - h\tan\theta & 0 & 0 \\ 0 & f - h\tan\theta & 0 \\ 0 & -\tan\theta & 1 \end{pmatrix}\begin{pmatrix} X \\ Y \\ Z \end{pmatrix} \qquad (19)$$

On the other hand, the perspective transformation of the coordinates (x, y, z), which corresponds to the case of θ = 0 in the equation (19), is given by the following equation.

$$s\begin{pmatrix} x \\ y \\ 1 \end{pmatrix} = \begin{pmatrix} f & 0 & 0 \\ 0 & f & 0 \\ 0 & 0 & 1 \end{pmatrix}\begin{pmatrix} X \\ Y \\ Z \end{pmatrix} \qquad (20)$$

Eliminating (X, Y, Z) from these two perspective transformation equations, and redefining s'/s as s', the following equation is obtained.

$$s'\begin{pmatrix} x' \\ y' \\ 1 \end{pmatrix} = \begin{pmatrix} 1 - \frac{h}{f}\tan\theta & 0 & 0 \\ 0 & 1 - \frac{h}{f}\tan\theta & 0 \\ 0 & -\frac{\tan\theta}{f} & 1 \end{pmatrix}\begin{pmatrix} x \\ y \\ 1 \end{pmatrix} \qquad (21)$$

Further, to transform the coordinates from the world coordinate system to the camera coordinate system, the point (u, v) in the camera coordinate system is mapped to the point (u', v'). The relationship between the coordinates (x, y, z) on the image plane of the camera whose optical axis coincides with the Z axis and the corresponding coordinates (u, v) in the camera coordinate system defined by that camera is expressed by the following equations.

$$u = x + w \,, \quad v = y + h$$

$$\therefore \quad x = u - w \,, \quad y = v - h \tag{2 2}$$

Likewise, the relationship between the coordinates (x', y', z') on the image plane of the camera whose optical axis is rotated by θ about the X axis and the corresponding coordinates (u, v) in the camera coordinate system defined by that camera is expressed by the following equations.

$$u' = x' + w, \quad v' = \frac{y' - (1 - 2\cos\theta)h}{\cos\theta}$$

$$\therefore \quad x' = u' - w \,, \quad y' = v' \cos\theta - (2\cos\theta - 1)h \tag{2 3}$$

Substituting the equations (22) and (23) into the equation (21) and thereby transforming the equation (21) into an equation expressed by the coordinates (u, v) and (u', v') in the camera coordinate system, the desired correction equation is obtained.

$$s'\begin{pmatrix} u' \\ v' \\ 1 \end{pmatrix} = \begin{pmatrix} 1 - \frac{w}{f}\tan\theta & -\frac{h}{f}\tan\theta & \frac{w}{f}\tan\theta \cdot 2h \\ 0 & \frac{1}{\cos\theta} - 2\frac{w}{f}\tan\theta & (1 - \frac{1}{\cos\theta} + \frac{h}{f}\tan\theta) \cdot 2h \\ 0 & -\frac{\tan\theta}{f} & 1 + \frac{h}{f}\tan\theta \end{pmatrix} \begin{pmatrix} u \\ v \\ 1 \end{pmatrix} \tag{2 4}$$

$$\frac{w}{f} = \tan\frac{FOVH}{2}$$

$$\frac{h}{f} = \tan\frac{FOVV}{2}$$

where FOVH represents the horizontal angle of view of the camera, and FOVV the vertical angle of view of the camera.

By transforming in accordance with the equation (24) the coordinates of each pixel in the left and right images corrected for the rotation of the subject, the trapezoidal distortion correcting unit 13 can correct the trapezoidal distortion. FOVH and FOVV are respectively the horizontal and the vertical angle of view of the imaging unit 2, and f represents the focal length of the imaging unit 2. In the present embodiment, $\theta = \phi_V/4$ in the equation (24), since the object plane corresponding to the image plane of the imaging unit 2 is tilted by $\phi_V/4$ because of the tilting of the outside mirrors in the stereo adapter 8.

The left and right images corrected for the trapezoidal distortion by the trapezoidal distortion correcting unit 13 can be used as the stereo images. The stereo image generating apparatus 6 displays the obtained stereo images on the display unit 4 or stores the images in the storage unit 5.

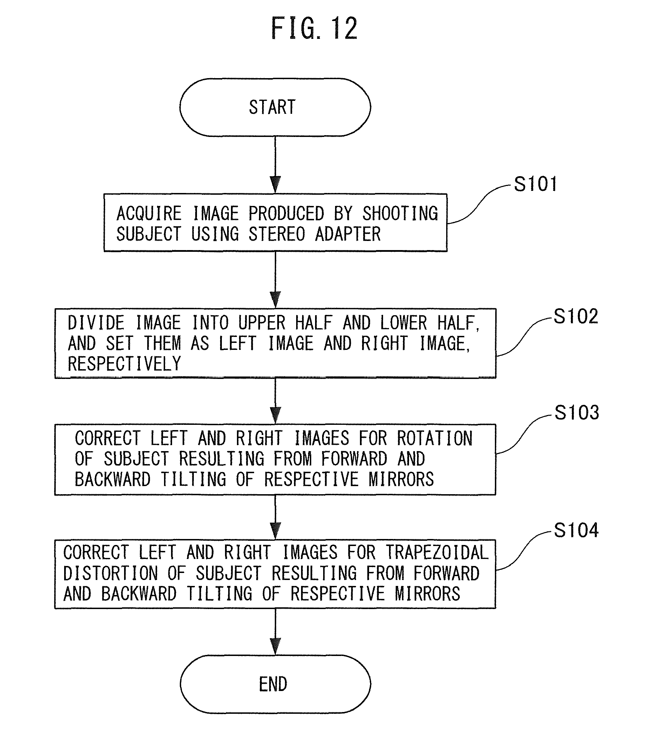

Figure 12 is an operation flowchart of a stereo image generating process performed by the stereo image generating apparatus 6.

The stereo image generating apparatus 6 acquires from the imaging unit 2 the image produced by shooting the subject using the stereo adapter 8 (step S101). Then, the stereo image generating apparatus 6 stores the image in the buffer 10.

The dividing unit 11 retrieves the image from the buffer 10. The dividing unit 11 then divides the image into the upper half corresponding to the left-eye mirror pair and the lower half corresponding to the right-eye mirror pair, and sets the divided images as the left image and right image, respectively (step S102).

The horizontal direction correcting unit 12 receives the left and right images from the dividing unit 11, and corrects the left and right images for the rotation of the subject resulting from the forward and backward tilting of the respective mirrors (step S103). Then, the trapezoidal distortion correcting unit 13 corrects the images for the trapezoidal distortion of the subject resulting from the forward and backward tilting of the respective mirrors (step S104). The stereo image generating apparatus 6 outputs the left and right images, corrected for the rotation and trapezoidal distortion of the subject, as the stereo image pair and terminates the stereo image generating process.

As has been described above, according to the stereo image generating apparatus and the stereo imaging apparatus, the stereo adaptor is used that splits the field of view of the imaging unit into two equal halves along the direction perpendicular to the parallax direction and that guides the left-eye light flux to the upper half of the field of view and the right-eye light flux to the lower half. With this arrangement, the stereo image generating apparatus and the stereo imaging apparatus can generate stereo images having a wide angle of view in the parallax direction. Further, in the stereo image generating apparatus and the stereo imaging apparatus, the amount of rotation and the amount of trapezoidal distortion of the subject caused in the image due to the arrangement of the optical mirrors contained in the stereo adapter are computed from the tilt angles of the mirrors and the vertical angle of view of the imaging unit. Then, the stereo image generating apparatus and the stereo imaging apparatus correct the rotation and trapezoidal distortion of the subject by image processing; in this way, the optical system of the stereo adapter can be simplified.

According to a modified example, the left-eye mirror pair and right-eye mirror pair contained in the stereo adapter may each be replaced by a prism having a reflecting face corresponding to the reflecting surface of the inside mirror and a reflecting face corresponding to the reflecting surface of the outside mirror. Since the positional relationship between the respective reflecting faces is fixed in the case of a prism, the alignment can be easily achieved when mounting the prism in the stereo adapter compared with the case when mounting the mirror pair in the stereo adapter.

Further, when the distance from the imaging unit to the subject is predetermined, the forward and backward tilt angles of the respective outside mirrors may be determined so as to maximize the region where the area contained in the left image and the area contained in the right image overlap each other at that distance. In this case, the shorter the distance, the larger the forward and backward tilt angles are set. Then, the larger the forward and backward tilt angles, the greater is the angle $\phi_1$ that the incident ray parallel to the optical axis of the imaging unit when entering the stereo adapter makes with the optical axis of the imaging unit when leaving the stereo adapter. In this case, the amount of correction, $\alpha$, for the rotation of the subject in the image can be obtained by substituting $\phi_1$ instead of $(\phi_V/4)$ into the equation (16). Further, in the equation (24) expressing the orthogonal projection transformation for correcting the trapezoidal distortion, the trapezoidal distortion correcting unit 13 uses $\phi_1$ as the angle $\theta$.

The functions of the various units constituting the stereo image generating apparatus according to the above embodiment may be implemented by a computer program executed on a processor. Such a computer program may be provided recorded on a computer readable recording medium such as a magnetic recording medium or an optical recording medium.

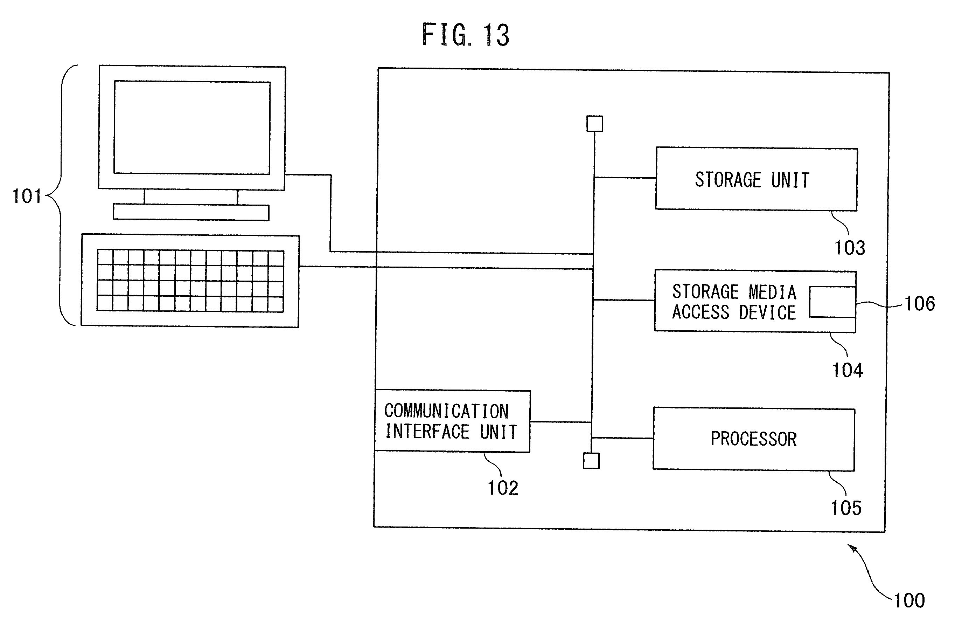

Figure 13 is a diagram illustrating the configuration of a computer that operates as the stereo image generating apparatus by executing a computer program for implementing the functions of the various units constituting the stereo image generating apparatus according to the above embodiment. The computer 100 includes a user interface unit 101, a communication interface unit 102, a storage unit 103, a storage media access device 104, and a processor 105. The processor 105 is connected to the user interface unit 101, communication interface unit 102, storage unit 103, and storage media access device 104, for example, via a bus.

The user interface unit 101 includes, for example, an input device such as a keyboard and a mouse, and a display device such as a liquid crystal display. Alternatively, the user interface unit 101 may include a device, such as a touch panel display, into which an input device and a display device are integrated. The user interface unit 101 generates, for example, in response to a user operation, an operation signal for starting the stereo image generating process, and supplies the operation signal to the processor 105.

The communication interface unit 102 may include a communication interface for connecting the computer 100 to an imaging apparatus (not depicted) to which the stereo adapter can be detachably mounted, and a control circuit for the communication interface. Such a communication interface may be, for example, a Universal Serial Bus (USB) interface.

Further, the communication interface unit 102 may include a communication interface for connecting to a communication network conforming to a communication standard such as the Ethernet (registered trademark), and a control circuit for the communication interface. In this case, the communication interface unit 102 acquires, from the imaging unit, camera, or some other apparatus connected to the communication network, images produced by shooting the subject using the stereo adapter, and passes the images to the processor 105. The communication interface unit 102 may also receive stereo images from the processor 105 and transmit them to another apparatus via the communication network.

The storage unit 103 includes, for example, a readable/writable semiconductor memory and a read-only semiconductor memory. The storage unit 103 stores a computer program for implementing the stereo image generating process to be executed on the processor 105, and also stores the reference region range and data, such as the various coefficients in the equations (17) and (24), to be used during the stereo image generating process. The storage unit 103 also stores images such as the images received via the communication interface unit 102 or the stereo images generated by the processor 105.

The storage media access device 104 is a device that accesses a storage medium 106 such as a magnetic disk, a semiconductor memory card, or an optical storage medium. The storage media access device 104 accesses the storage medium 106 to read out, for example, the computer program for stereo image generation to be executed on the processor 105, and passes the readout computer program to the processor 105. Further, the storage media access device 104 may write the stereo images generated by the processor 105 onto the storage medium 106.

The processor 105 executes the computer program for stereo image generation according to the above embodiment and generates the stereo images from the images produced by shooting the subject using the stereo adapter. The processor 105 stores the generated stereo images in the storage unit 103 or transmits them to another apparatus via the communication interface unit 102.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of superiority and inferiority of the invention. Although the embodiments of the present invention have been described in detail, it should be understood that the various changes, substitutions, and alterations could be made hereto without departing from the spirit and scope of the invention.

**Claims**

1. A stereo imaging apparatus comprising:

   an imaging unit (2) which generates an image by shooting a subject;
   a stereo adapter (8) which is mounted on the front of the imaging unit, and which splits light from the subject into a first light flux and a second light flux along a parallax direction and guides the first and second light fluxes so that the first and second light fluxes are incident side by side on the imaging unit in a direction perpendicular to the parallax direction and so that, in the first light flux, any ray parallel to an optical axis of the imaging unit when entering the stereo adapter is brought closer to the second light flux by forming a first angle with respect to the optical axis when leaving the stereo adapter and, in the second light flux, any ray parallel to the optical axis when entering the stereo adapter is brought closer to the first light flux by forming the first angle with respect to the optical axis when leaving the stereo adapter; and
   a stereo image generating unit (6) which, based on the image, generates stereo images, and wherein the stereo image generating unit includes:

      a dividing unit (11) which divides the image along the direction perpendicular to the parallax direction into a first region on which the first light flux is incident and a second region on which the second light flux is incident, and which outputs the first region as a first sub-image of the stereo images for one eye and the second region as a second sub-image of the stereo images for the other eye;
      a horizontal direction correcting unit (12) which corrects any rotation of the subject occurring in the first and second sub-images in proportion to the first angle; and
      a trapezoidal distortion correcting unit (13) which corrects any trapezoidal distortion of the subject occurring in the first and second sub-images in proportion to the first angle.

2. The stereo imaging apparatus according to claim 1, wherein the stereo adapter includes:

   first and second reflecting faces (81a, 81b) arranged in front of the imaging unit along the direction perpendicular to the parallax direction;
   a third reflecting face (82a) which is disposed farther away from the imaging unit along the parallax direction than the first reflecting face;
   a fourth reflecting face (82b) which is disposed farther away from the imaging unit along the parallax direction than the second reflecting face and located on a side opposite to the third reflecting face with respect to the optical axis of the imaging unit, and wherein:

      the first reflecting face (81a) is rotated about a first axis perpendicular to both the parallax direction and the optical axis by a second angle with respect to an entrance pupil plane of the imaging unit so as to face the imaging unit and the third reflecting face;

the third reflecting face (82a) is rotated about the first axis by the second angle with respect to an object plane, whose image is to be focused on an image plane of the imaging unit, so as to face the subject and the first reflecting face, and is tilted by a third angle about an axis parallel to the third reflecting face and perpendicular to the first axis so that the ray incident on the center of the third reflecting face and parallel to the optical axis is brought closer to the optical axis by forming the first angle as the ray approaches the imaging unit;

the second reflecting face (81b) is rotated about the first axis by the second angle with respect to the entrance pupil plane of the imaging unit in a direction opposite to the rotation of the first reflecting face so as to face the imaging unit and the fourth reflecting face;

the fourth reflecting face (82b) is rotated about the first axis by the second angle with respect to the object plane in a direction opposite to the rotation of the third reflecting face so as to face the subject and the second reflecting face, and is tilted by the third angle about an axis parallel to the fourth reflecting face and perpendicular to the first axis so that the ray incident on the center of the fourth reflecting face and parallel to the optical axis is brought closer to the optical axis by forming the first angle as the ray approaches the imaging unit;

the first light flux is first reflected by the third reflecting face and then reflected by the first reflecting face so as to enter the imaging unit, while the second light flux is first reflected by the fourth reflecting face and then reflected by the second reflecting face so as to enter the imaging unit.

3. The stereo imaging apparatus according to claim 1 or 2, wherein the first angle is one quarter of an angle of view of the imaging unit (2) as measured in the direction perpendicular to the parallax direction.

4. The stereo imaging apparatus according to any one of claims 1 to 3, wherein the horizontal direction correcting unit (12) rotates the first sub-image so as to cancel out any amount of rotation of the subject occurring in the first sub-image in proportion to the first angle and to an optical path length difference occurring, due to the second angle, between the optical path lengths that two rays reflected at different positions on the third reflecting face, one spaced apart from the other in the parallax direction, respectively traverse from the third reflecting face to the imaging unit.

5. The stereo imaging apparatus according to any one of claims 1 to 4, wherein the trapezoidal distortion correcting unit (13) corrects the trapezoidal distortion of the subject in the first-sub image by applying to the first sub-image corrected for the rotation of the subject an orthogonal projection transformation for transforming from a plane perpendicular to the ray that becomes parallel to the optical axis by being reflected on the third reflecting face and on the first reflecting face to a plane perpendicular to the optical axis.

6. A stereo image generating method for generating stereo images from an image generated by an imaging apparatus (1), the imaging apparatus comprising: an imaging unit (2) which generates the image by shooting a subject; and a stereo adapter (8) which is mounted on the front of the imaging unit, and which splits light from the subject into a first light flux and a second light flux along a parallax direction and guides the first and second light fluxes so that the first and second light fluxes are incident side by side on the imaging unit in a direction perpendicular to the parallax direction and so that, in the first light flux, any ray parallel to an optical axis of the imaging unit when entering the stereo adapter is brought closer to the second light flux by forming a first angle with respect to the optical axis when leaving the stereo adapter and, in the second light flux, any ray parallel to the optical axis when entering the stereo adapter is brought closer to the first light flux by forming the first angle with respect to the optical axis when leaving the stereo adapter, the stereo image generating method comprising:

dividing the image along the direction perpendicular to the parallax direction into a first region on which the first light flux is incident and a second region on which the second light flux is incident, and outputting the first region as a first sub-image of the stereo images for one eye and the second region as a second sub-image of the stereo images for the other eye;

correcting any rotation of the subject occurring in the first and second sub-images in proportion to the first angle; and

correcting any trapezoidal distortion of the subject occurring in the first and second sub-images in proportion to the first angle.

EP 2 848 996 A1

# FIG. 1

STEREO IMAGE
GENERATING
APPARATUS — 6

STORAGE
UNIT

5

CONTROL
UNIT

7

OPERATING
UNIT

3

DISPLAY UNIT

4

1

8

2

FIG. 2A

FIG. 2B

FIG. 2C

# FIG. 3

# FIG. 4

# FIG. 5

FIG. 6A

600

FIG. 6B

610

# FIG. 7

STEREO IMAGE GENERATING APPARATUS

IMAGE → BUFFER → DIVIDING UNIT → HORIZONTAL DIRECTION CORRECTING UNIT → TRAPEZOIDAL DISTORTION CORRECTING UNIT → STEREO IMAGES

10    11    12    13

6

# FIG. 8

804    $\varphi_V/4$    805

A

802

803    801

82a

y
z
x

# FIG. 9

$\varphi_V/4$

903    902

y
z

901    $\varphi_V/4$

FIG. 10

FIG. 11

# FIG. 12

```
                    ┌─────────────┐
                    │    START    │
                    └─────────────┘
                           │
                           ▼
┌──────────────────────────────────────────┐        S101
│ ACQUIRE IMAGE PRODUCED BY SHOOTING         │
│ SUBJECT USING STEREO ADAPTER               │
└──────────────────────────────────────────┘
                           │
                           ▼
┌──────────────────────────────────────────┐        S102
│ DIVIDE IMAGE INTO UPPER HALF AND LOWER HALF,│
│ AND SET THEM AS LEFT IMAGE AND RIGHT IMAGE,│
│ RESPECTIVELY                               │
└──────────────────────────────────────────┘
                           │
                           ▼
┌──────────────────────────────────────────┐        S103
│ CORRECT LEFT AND RIGHT IMAGES FOR ROTATION │
│ OF SUBJECT RESULTING FROM FORWARD AND      │
│ BACKWARD TILTING OF RESPECTIVE MIRRORS     │
└──────────────────────────────────────────┘
                           │
                           ▼
┌──────────────────────────────────────────┐        S104
│ CORRECT LEFT AND RIGHT IMAGES FOR TRAPEZOIDAL│
│ DISTORTION OF SUBJECT RESULTING FROM FORWARD│
│ AND BACKWARD TILTING OF RESPECTIVE MIRRORS │
└──────────────────────────────────────────┘
                           │
                           ▼
                    ┌─────────────┐
                    │     END     │
                    └─────────────┘
```

# FIG. 13

EP 2 848 996 A1

# EP 2 848 996 A1

Europäisches
Patentamt

European
Patent Office

Office européen
des brevets

## EUROPEAN SEARCH REPORT

**Application Number**

EP 14 18 2457

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2000 056412 A (SEKINE JIRO) 25 February 2000 (2000-02-25) stereo imaging apparatus comprising a stereo adapter a stereo image generating unit comprising a dividing unit; * abstract; figures 1-2 * | 1-6 | INV. G03B35/10 |
| A | JP 2004 004869 A (OLYMPUS CORP) 8 January 2004 (2004-01-08) stereo imaging apparatus comprising a stereo adapter a stereo image generating unit comprising a dividing unit; * abstract; figures 1-8 * | 1-6 | |
| A | US 2012/154549 A1 (AN WENGE DAVID [US]) 21 June 2012 (2012-06-21) * stereo imaging apparatus comprising a stereo adapter a stereo image generating unit comprising a dividing unit; the whole document * | 1-6 | |
| A | EP 1 645 844 A1 (OLYMPUS CORP [JP]) 12 April 2006 (2006-04-12) * stereo imaging apparatus comprising a stereo adapter a stereo image generating unit comprising a dividing unit; the whole document * | 1-6 | TECHNICAL FIELDS SEARCHED (IPC) G03B |
| A | JP H07 87385 A (CANON KK) 31 March 1995 (1995-03-31) stereo imaging apparatus comprising a stereo adapter a stereo image generating unit comprising a dividing unit; * abstract; figures 1-5 * | 1-6 | |

-/--

The present search report has been drawn up for all claims

| Place of search | Date of completion of the search | Examiner |
|---|---|---|
| Munich | 21 January 2015 | Tomezzoli, Giancarlo |

EPO FORM 1503 03.82 (P04C01)

Europäisches
Patentamt

European
Patent Office

Office européen
des brevets

## EUROPEAN SEARCH REPORT

Application Number

EP 14 18 2457

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2004 070302 A (SHIMIZU ERIKO) 4 March 2004 (2004-03-04) stereo imaging apparatus comprising a stereo adapter a stereo image generating unit comprising a dividing unit; * abstract; figures 1-8 * ----- | 1-6 | |

TECHNICAL FIELDS
SEARCHED      (IPC)

The present search report has been drawn up for all claims

| Place of search | Date of completion of the search | Examiner |
|---|---|---|
| Munich | 21 January 2015 | Tomezzoli, Giancarlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 18 2457

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2015

| Patent document cited in search report | | Publication date | Patent family member(s) | | Publication date |
|---|---|---|---|---|---|
| JP 2000056412 | A | 25-02-2000 | NONE | | |
| JP 2004004869 | A | 08-01-2004 | JP | 3834016 B2 | 18-10-2006 |
| | | | JP | 2004004869 A | 08-01-2004 |
| US 2012154549 | A1 | 21-06-2012 | CN | 102944967 A | 27-02-2013 |
| | | | CN | 202583688 U | 05-12-2012 |
| | | | US | 2012154549 A1 | 21-06-2012 |
| | | | US | 2014160242 A1 | 12-06-2014 |
| EP 1645844 | A1 | 12-04-2006 | CN | 1813168 A | 02-08-2006 |
| | | | EP | 1645844 A1 | 12-04-2006 |
| | | | JP | 4402400 B2 | 20-01-2010 |
| | | | JP | 2005077130 A | 24-03-2005 |
| | | | US | 2006072914 A1 | 06-04-2006 |
| | | | WO | 2005022083 A1 | 10-03-2005 |
| JP H0787385 | A | 31-03-1995 | NONE | | |
| JP 2004070302 | A | 04-03-2004 | NONE | | |

EPO FORM P0459

For more details about this annex : see Official Journal of the European Patent Office, No. 12/82

**EP 2 848 996 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01279235 B
- JP H07134345 B
- JP 2000081331 A
- JP H08171151 B
- JP H08234339 B
- JP 2004004869 A